# EUROPÄISCHE PATENTANMELDUNG

(11) **EP 3 462 256 A1**
(43) Veröffentlichungstag der Anmeldung: **03.04.2019**
(21) Anmeldenummer: 17194140.4
(22) Anmeldetag: 29.09.2017
(51) Int. Cl.: G05B 19/05, G06F 13/38, G05B 19/042, G06F 8/65

(54) **KONFIGURATION EINES AN EINEM BUSSYSTEM ANGESCHLOSSENEN MESSSYSTEMS**

(71) Anmelder: Wachendorff Automation GmbH & Co. KG, 65366 Geisenheim (DE)
(72) Erfinder: WACHENDORFF, Robert, 65347 Eltville-Hattenheim (DE); HANß, Tobias, 55413 Trechtingshausen (DE)
(74) Vertreter: Tergau & Walkenhorst Patentanwälte PartGmbB

(57) **Zusammenfassung**

Verfahren zur Konfiguration eines an einem Bussystem angeschlossenen Messsystems mit den folgenden Schritten:
a) Detektion des verwendeten Bus-Protokolls durch eine im Messsystem angeordnete Detektierungseinheit,
b) Abrufen der Firmware zum detektierten Protokoll aus einer Datenbank durch eine Initialisierungseinheit,
c) Hinterlegung der Firmware zum detektierten Bus-Protokoll in einer Speichereinheit,
d) Verwendung des in der Speichereinheit hinterlegten Protokolls zur Kommunikation mit dem Bussystem.

## Beschreibung

Die Erfindung bezieht sich auf ein Verfahren zur Konfiguration eines an einem Bussystem angeschlossenen Messsystems.

Im Rahmen des Industrie-4.0 Projektes soll in Zukunft an die Stelle der klassischen hierarchischen Automatisierungspyramide eine flache Architektur treten. Intelligente Geräte kommunizieren dabei untereinander und direkt mit einer Cloud. In diesen Bereichen wird die Produktionstechnik in Zukunft neuen Anforderungen an Dynamik und Vielseitigkeit genügen müssen. Zum einen steht zu erwarten, dass die Fertigungskette stärker über Unternehmensgrenzen hinweg vernetzt wird. Gleichzeitig steigen das Datenaufkommen aus Sensorik und Aktorik sowie der Integrationsbedarf von Prozessdaten in Unternehmenssysteme. Um dieser Entwicklung Rechnung tragen zu können, ist neben der Virtualisierung der Steuerungstechnik vor allem der Einsatz von schnellem Ethernet auf der Feldebene unabdingbar.

Unter Maßgabe der o. g. Rahmenbedingungen hat sich inzwischen der Begriff ,Industrial Ethernet' etabliert. Man versteht darunter den Ansatz, den aus der IT-Welt bekannten Ethernet-Standard (IEEE 802.3) auf industrielle Automatisierungsanwendungen zu portieren. Wesentliches Ziel dabei ist es, klassische Feldbusse wie ProfiBUS, CANopen, DeviceNET, HART, Modbus RTU, etc. zu ersetzen und eine Vernetzungslösung zu schaffen, die alle Ebenen der Automatisierungsaufgabe einschließt.

Der Schritt von Ethernet zum Industrial Ethernet umfasst zum einen die "Härtung" der ursprünglich für die Bürowelt ausgelegten Ethernet-Infrastruktur gegen die raue Welt des industriellen Einsatzes: der Betriebstemperaturbereich muss erweitert werden (typisch -40...+80°C); die Schutzart gegen Staub, Feuchtigkeit, Spritzwasser etc. muss erhöht werden; die Beständigkeit gegen Medien wie Öle, Schmier- und Betriebsstoffe, Säuren und Laugen, sowie Reinigungsmittel hergestellt werden; die Vibrations- und Stoßfestigkeit verbessert werden; eine erhöhte EMV-Störsicherheit sichergestellt werden; Anpassung an typische Versorgungsspannungen wie 12V_{DC} oder 24V_{DC}, Anpassung an industrielle Gehäuse- und Montagestandards wie z.B. Hutschienenmontage; etc. Diese Anforderungen werden inzwischen weitestgehend beherrscht.

Zum anderen stellen die Industriellen Anwendungen oft protokollseitig erweiterte/hohe Anforderungen an Ausfallsicherheit, Energiemanagement und/oder Echtzeitanforderungen mit isochronen Zykluszeiten etc.. Da Ethernet nach IEEE802.3 nur die beiden untersten Schichten nach dem Open Systems Interconnection (OSI)-Referenzmodell definiert, wurden Herstellerseitig mehrere parallel zueinander konkurrierende Industrial-Ethernet-Protokolle entwickelt.

Je nach den zugrundenliegenden Anforderungen und Lösungskonzepten, insbesondere bezüglich "Echtzeit", definieren die einzelnen Industrial-Ethernet-Protokolle in unterschiedlicher Art und Tiefe die über Ethernet hinausgehenden Schichten des OSI-Referenzmodels.

Trotz etlicher Bemühungen von Anwenderseite existiert bis dato kein einheitlicher Standard. Auch ist angesichts der Marktanteile der jeweiligen Technologietreiber nicht zu erwarten, dass sich eines der genannten Protokolle zum De-Facto-Standard entwickelt. Dies hat zur Folge, dass es auch in Zukunft heterogene Kommunikationstrukturen geben wird, mit der Konsequenz, dass Komponentenhersteller für Maschinenanlagen sich stets auf die in den jeweiligen Anlagen eingesetzten Protokolle einstellen müssen und somit entweder auf einzelne Maschinenanlagen und somit Protokolle einschränken müssen oder ein besonders breites Produktspektrum anbieten müssen. Die Notwendigkeit, Lösungen für mehrere Protokolle herzustellen, zu vertreiben, zu implementieren, vorzuhalten, zu warten und zu betreuen bedeutet für alle Beteiligten allerdings einen immensen Aufwand. Auch auf Anwenderseite führt dies zu Problemen, da stets die Kompatibilität der verwendeten Komponenten auch auf Protokollebene geprüft werden muss.

Der Erfindung liegt daher die Aufgabe zugrunde eine Maschinenkomponente, insbesondere ein Messsystem, und ein Verfahren zur Konfiguration dieses Messsystems anzugeben, welches die oben genannten Nachteile behebt und möglichst unabhängig von dem in der Maschinenanlage verwendeten Kommunikationsprotokoll eingesetzt werden kann.

Bezüglich des Verfahrens zur Konfiguration wird die Aufgabe erfindungsgemäß gelöst, indem die folgenden Schritte durchgeführt werden:
- Detektion des verwendeten Bus-Protokolls durch eine im Messsystem angeordnete Detektierungseinheit,
- Abrufen der Firmware zum detektierten Protokoll aus einer Datenbank durch eine Initialisierungseinheit,
- Hinterlegung der Firmware zum detektierten Bus-Protokoll in einer Speichereinheit,
- Verwendung des in der Speichereinheit hinterlegten Protokolls zur Kommunikation mit dem Bussystem

Die Erfindung geht von der Überlegung aus, dass eine besonders hohe Kompatibilität mit verschiedenen Maschinenanlagen dann erreicht werden kann, wenn das Messsystem dazu ausgebildet ist mit verschiedenen, verwendeten Protokollen zu kommunizieren. Dabei wurde zunächst erkannt, dass eine Multiprotokoll-Lösung zwar prinzipiell machbar wäre, diese aber weitere Nachteile aufweist. So wäre beispielsweise der Hardware-Ressourcenbedarf, insbesondere im Bereich der Speichereinheiten, signifikant höher. Dies schlägt sich unter anderem negativ im Platzbedarf auf der Leiterplatte und/oder im Gehäuse nieder, wobei sich letzteres z.B. wieder auf das thermische Management zur Abfuhr der auftretenden Verlustleistungen auswirkt. Nicht zu vergessen sind natürlich die zu erwartenden Mehrkosten. Weiterhin wäre eine solche "Universalfirmware" weitaus komplexer als eine auf ein Protokoll spezialisierte Firmware. Da in der Softwareentwicklung der Testaufwand nicht linear, sondern exponentiell mit der Codegröße ansteigt, ist ein entsprechend höherer Testaufwand gegenüber der Entwicklung mehrere voneinander unabhängiger Implementierungen unumgänglich. Dazu kommt, dass die Anbieter der Protokolle das Durchlaufen eines Zertifizierungsprozesses vor dem Inverkehrbringen eines Produktes mit ihrem Protokoll verlangen. Eine Universalfirmware müsste hier die Zertifizierung für jedes einzelne Protokoll durchlaufen, bei dem aufgrund von Abhängigkeiten und Wechselwirkungen zwischen den einzelnen Protokollen ein wesentlich höherer Aufwand besteht. Bei einer Änderung der Universalfirmware aufgrund eines einzelnen Protokolls, würde dies aufgrund der Abhängigkeiten und Wechselwirkungen die Zertifizierung aller implementierten Protokolle notwendig machen. Dies würde nicht nur den Aufwand, sondern auch die Kosten deutlich erhöhen. Schlussendlich sind die Kunden in der Regel aber nicht bereit für Features zu Zahlen, die nicht oder nur selten genutzt werden. Dies trifft in erster Linie Kunden, die sich auf ein Protokoll festgelegt haben.

Im Rahmen dieser Überlegungen wurde erkannt, dass das Messsystem zwar eine Vielzahl von möglichen Protokollen abdecken sollte, dass die Auswahl des richtigen Protokolls aber in der Regel nur einmal vorgenommen wird. Auf Basis diese Erkenntnis und für eine besonders effiziente und anwenderfreundliche Konfiguration des Messsystems ist eine automatische Erkennung des in der Maschinenanlage verwendeten Protokolls hilfreich. Dazu umfasst das Messsystem eine Detektionseinheit, die das verwendete Protokoll auf dem Bussystem der Maschinenanlage, an die das Messsystem angeschlossen ist, erkennt. Auf Basis dieser Detektion wird anschließend das Messsystem zur Kommunikation mit diesem einen Protokoll und somit zur fehlerfreien Kommunikation mit der Maschinenanlage vorbereitet. Dazu wird die dem Protokoll zugeordnete Firmware aus einer Datenbank oder ganz allgemein von einer Datenquelle in den Speicher des Messsystems geladen, um dem Messsystem die Kommunikation über das Protokoll zu ermöglichen.

Das Messsystem kann vorliegend dazu ausgestaltet sein eine Vielzahl von physikalischen Messgrößen zu bestimmen. Dazu zählen insbesondere Druck, Temperatur, Feuchte, Gaszusammensetzungen oder auch optische Messgrößen wie die Erkennung von Bildern, Barcodes und Farbe. Besonders bevorzugt werden durch das Messsystem allerdings eine translatorische oder rotatorische Bewegung, beispielsweise in Form eines Kodierers oder Drehgebers, erkannt und gemessen.

Für eine einfache Detektierung des verwendeten Protokolls auf dem Bussystem, liest die Detektierungseinheit einzelne Datenpakete anderer Knoten mit, um aus der Struktur und dem Aufbau des Datenpaketes, dass verwendete Protokoll bestimmen zu können. Dieser Ansatz geht davon aus, dass in einer bestehenden Applikation auf dem Bus bereits Nachrichten/Datenpakete anderer Knoten ausgetauscht werden, welche mit-gelesen, analysiert und interpretiert werden können. Bei bestehenden Applikationen sollte dies in vielen Fällen gegeben sein. Für den Fall, dass auf dem Bus keinerlei Datenverkehr herrscht, z. B. bei einer reinen Punkt-zu-Punkt-Verbindung zwischen Master und den Auto-Detect-Slave, kann durch aktives Senden einer Nachricht eine interpretierbare Reaktion des Masters (Steuerung/SPS), wie z.B. eine Error-Message, provoziert werden. Deshalb ist in alternativer oder zusätzlicher Ausgestaltung die Detektierungseinheit dazu ausgebildet ein Anfragesignal über das Bussystem zu versenden, um anschließend über die erhaltene Antwort bzw. Reaktion das verwendete Bus-Protokoll zu bestimmen.

Bei der Detektion des verwendeten Protokolls macht sich die Detektierungseinheit das im OSI-Referenzmodell verwendete Schichtensystem zu nutze. Dabei werden im Rahmen der Analyse einzelne Schichten oder Schichtengruppen auf entsprechende Eigenschaften hin überprüft, um so je nach Ergebnis eine Teilmenge der in Frage kommenden Protokolle zu erhalten. Diese erste Anfrage filtert somit aus der ursprünglich großen Anzahl an möglichen Protokollen, diejenigen raus, die die entsprechende angefragte Eigenschaft erfüllen oder nicht erfüllen. Diese Teilmenge an möglichen Protokollen kann dann im Rahmen eines zweiten Schrittes oder einer zweiten Abfrage bezüglich ihrer Eigenschaft hinsichtlich anderer Schichten weiter reduziert werden bis am Ende nur ein einzelnes mögliches Protokoll übrig bleibt. Durch dieses Verfahren wird sukzessive das verwendete Protokoll aus der Menger der möglichen Protokolle herausgefiltert und somit von der Detektierungseinheit identifiziert.

Nach Bestimmung des auf dem Bussystem verwendeten Protokolls wird die dazu passende Firmware auf dem Messsystem initialisiert und hinterlegt. Dazu wird die Firmware in bevorzugter Ausführung aus einer internen und/oder externen Datenbank abgerufen und geladen. Die interne Datenbank kann dabei eine Speichereinheit in dem Messsystem sein, wo bereits eine Vielzahl von Firmware für die üblicherweise verwendeten Protokolle hinterlegt ist. Sollte die benötigte Firmware in einer solchen Speichereinheit nicht vorliegen oder wird ganz auf eine interne Datenbank verzichtet, wird die Firmware in bevorzugter Ausführung aus einer externen Datenbank oder allgemein einer Datenquelle abgerufen. Dies kann einerseits durch den direkten Anschluss einer externen Datenquelle, beispielsweise in Form eines externen Speichers, an das Messsystem für die Initialisierung erfolgen, andererseits ist aber auch die Verwendung eines Webservers im Messsystem möglich, durch den auf Datenbanken im Web zugegriffen werden kann. So ist es möglich, die Firmware aus externen Datenbanken, beispielsweise direkt vom Hersteller des Messsystems oder auch vom Anbieter des Protokolls, zu laden und auf dem Messsystem zu hinterlegen.

Die mit der Erfindung erzielten Vorteile bestehen insbesondere darin, dass durch die Detektion des verwendeten Protokolls auf dem Bussystem und anschließender Installation der dazu passenden Firmware das Messsystem an verschiedenste Bussysteme angeschlossen werden kann, ohne dass der Nutzer vorher auf eine bestimmte Protokollart oder umgekehrt auf bestimmte Messsysteme eingeschränkt ist. Der Nutzer ist damit nicht mehr gezwungen im Vorfeld Kompatibilitätsprüfungen durchzuführen, da das erfindungsgemäße Messsystem mit allen verwendeten und auch zukünftig entwickelten Protokollen kompatibel ist bzw. durch eine Aktualisierung der Firmware kompatibel wird.

Ein Ausführungsbeispiel der Erfindung wird anhand einer Zeichnung näher erläutert. Darin zeigen:
- Fig. 1: Verfahren zur Konfiguration eines Messsystems,
- Fig. 2: Installation der Firmware aus einer internen Datenbank,
- Fig. 3: Installation der Firmware aus einer externen Datenbank.
Gleiche Teile sind in allen Figuren mit denselben Bezugszeichen versehen.

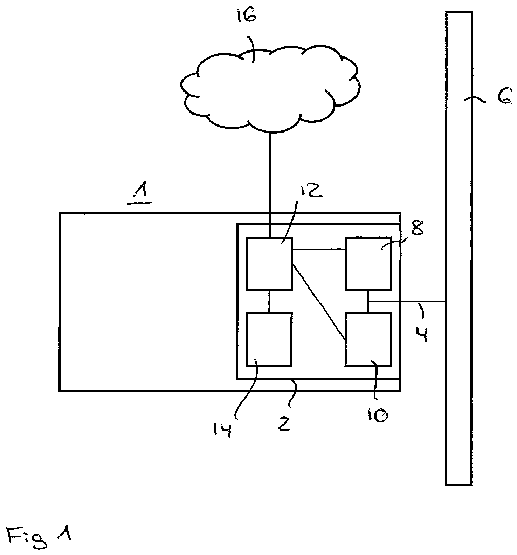

Das Verfahren zur Konfiguration eines als Drehgeber ausgebildeten Messsystems 1 ist in Fig. 1 dargestellt. Das Messsystem 1 umfasst eine nicht dargestellte Sensor- oder Messeinheit, zur Erfassung der zu detektierenden Daten. Weiterhin umfasst das Messsystem 1 eine Kommunikationseinheit 2, welche die gemessenen Daten zur weiteren Auswertung oder Steuerung anderer Einheiten weiterleitet. Dazu ist das Messsystem 1 bzw. konkreter das Kommunikationsmodul 2 des Messsystems 1 über eine bidirektionale Datenleitung 4 an ein Bussystem 6 angeschlossen. Das Bussystem 6 verwendet zur Kommunikation mit den einzelnen Einheiten und somit auch zur Kommunikation mit dem Messsystem 1 ein Kommunikationsprotokoll. Das Messsystem 1 ist daher nur dann in der Lage die gemessene Daten an das Bussystem 6 zu übergeben und somit an weitere daran angeschlossene Einheiten zu übermitteln, wenn das Messsystem 1 das verwendete Protokoll versteht und in diesem kommunizieren kann. Dazu umfasst das Kommunikationsmodul 2 eine Speichereinheit, in der eine Firmware hinterlegt ist, die das Messsystem 1 dazu ausbildet in dem Protokoll und somit mit dem Bussystem 6 zu kommunizieren. Im Allgemeinen führt dies dazu, dass bei der Verwendung von neuen Messsystemen der Nutzer das auf dem Bussystem verwendete Protokoll kennen muss und entsprechend dem dort verwendeten Protokoll ein Messsystem aussuchen muss, welches dieses Protokoll kennt. Dies erzeugt sowohl in der Planung einer neuen Anlage mit diversen Messsystemen für erheblichen Mehraufwand und schränkt gleichzeitig die möglichen Messsysteme oder umgekehrt die möglichen Protokolle mit denen das Bussystem arbeiten kann erheblich ein.

Das Kommunikationsmodul 2 nach Fig. 1 umfasst daher eine Detektierungseinheit 10, die beim Anschluss des Messsystems 1 an das Bussystem 6 das dort verwendete Protokoll ermittelt. Dies kann einerseits aktiv durch senden einer Kontrollnachricht und Auswertung der Antwort geschehen, andererseits aber auch passiv, durch mitlesen und auswerten bereits auf dem Bussystem 6 gesendeter Datenpakete von anderen Einheiten. Die von der Detektierungseinheit 10 ermittelten Informationen zum verwendeten Protokoll werden an eine Initialisierungseinheit 12 des Kommunikationsmoduls 2 weitergegeben, welche die für das Protokoll benötigte Firmware abruft. Die Initialisierungseinheit 12 kann dabei auf eine interne Datenbank 14 zugreifen, wo verschiedene Firmwares für die unterschiedlich möglichen Protokolle hinterlegt sind. Zusätzlich oder auch alternativ kann die Initialisierungseinheit 12 über einen Webserver die benötigte Firmware aus einer externen Datenquelle16, beispielsweise aus einer auf einem externen Server hinterlegten Datenbank, abrufen. Ebenfalls möglich, in Fig. 1 aber nicht gesondert dargestellt, ist der direkte Anschluss einer externen Datenbank an das Messsystem 1, beispielsweise im Wege eines externen Speichers mit USB-Anschluss, zur Bereitstellung der benötigten Firmware. Die von der Initialisierungseinheit 12 geladene Firmware wird anschließend in der internen Speichereinheit 8 hinterlegt und das Messsystem 1 somit zur Kommunikation mit dem Bussystem 6 ertüchtigt.

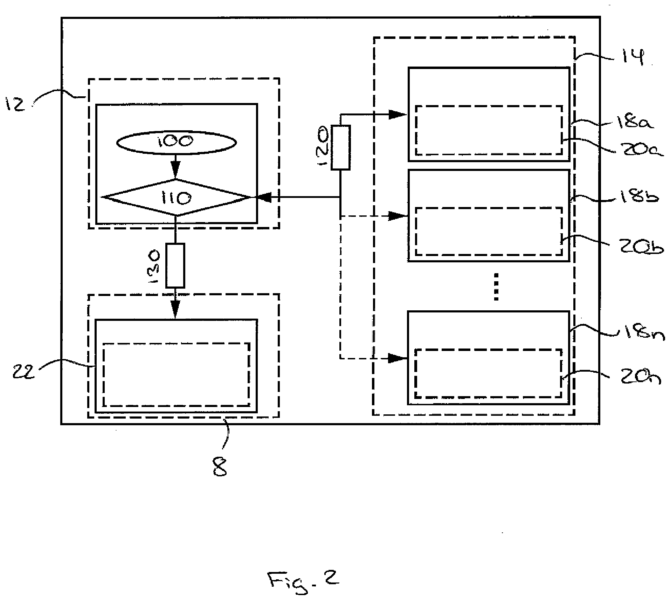

Die Installation der Firmware bei einer vorhandenen internen Datenbank ist in Fig. 2 näher dargestellt. Sobald der Initialisierungseinheit 12 die Informationen zum verwendeten Protokoll vorliegen, startet 100 das Verfahren zum Laden des benötigten Protokolls in die interne Speichereinheit 8. In Schritt 110 wird versucht die Firmware aus der internen Datenbank 14 zu laden. Die interne Datenbank 14 umfasst dazu eine Vielzahl von Firmware-Dateien 18a, 18b, ..., 18n, die jeweils einem bestimmten Protokoll 20a, 20b, ..., 20n zugeordnet sind. Auf Basis der vorliegenden Informationen lädt 120 die Initialisierungseinheit 12 nun die entsprechende Firmware 18a, 18b, ..., 18n aus der internen Datenbank 14 und lägt 130 sie in der Speichereinheit 8 ab, die für die aktive Firmware vorgesehen ist.

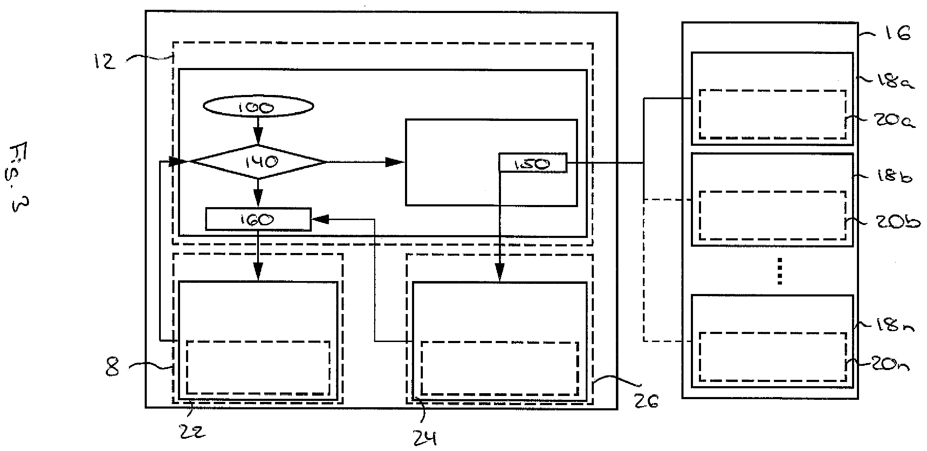

Ähnlich ist dies, wenn die Firmware von einem externen Server bzw. aus einer externen Datenbank 16 geladen wird, wie es in Fig. 3 dargestellt wird. Das Messsystem 1 nach der Fig. 3 hat bei Auslieferung eine Firmware 24 vorinstalliert. Diese vorinstallierte Firmware 24 ist in einem zweiten internen Speicher 26 abgelegt und kann von der Initialisierungseinheit 12 in den internen Speicher 8 für die aktive Firmware 22 geladen werden. Bei Anschluss des Messsystems 1 an ein Bussystem 6 und bei erhalt der Informationen zum dort verwendeten Protokoll wird daher zunächst in Verfahrensschritt 140 geprüft, ob die aktuell verwendete Firmware verwendet werden kann oder ob ein Protokollwechsel stattgefunden hat und somit eine neue Firmware geladen werden muss. Diese Überprüfung kann beispielsweise nicht nur beim erstmaligen Anschluss des Messsystems erfolgen, sondern periodisch oder ereignisabhängig, beispielsweise bei jedem Neustart des Messsystems. Eine solche Überprüfung des Protokollwechsels ist selbstverständlich auch bei einer internen Datenbank, wie sie in Fig. 2 beschrieben wird, möglich. Sollte festgestellt werden, dass sich das Protokoll geändert hat und somit eine neue Firmware benötigt wird, wird diese über einen Web-Server 28 aus einer externen Datenquelle 16, beispielsweise einer Datenbank eines externen Servers geladen. Diese Firmware wird dann in den zweiten Speicher 26 für die vorinstallierte Firmware 24 geladen 150, um bei einem Neustart des Messsystems direkt zur Verfügung zu stehen. In diesem zweiten Speicher 26 ist somit immer die zuletzt verwendete Firmware hinterlegt, damit diese nicht immer neu aus der externen Quelle 16 geladen werden muss. Anschließend wird die Firmware 24 aus dem zweiten Speicher 26 in den internen Speicher 8 für die aktuell verwendete Firmware 22 geladen 160 und somit das Messsystem 1 zur Kommunikation mit dem Bussystem 6 ertüchtigt.

### Bezugszeichenliste

- 1: Messsystem
- 2: Kommunikationseinheit
- 4: bidirektionale Datenleitung
- 6: Busssystem
- 8: Speichereinheit
- 10: Detektierungseinheit
- 12: Initialisierungseinheit
- 14: interne Datenbank
- 16: externe Datenbank
- 18: Firmware-Datei
- 20: Protokoll
- 22: aktive Firmware
- 24: vorinstallierte Firmware
- 26: zweiter, interner Speicher
- 28: Web-Server

- 100: Verfahrensschritt
- 110: Verfahrensschritt
- 120: Verfahrensschritt
- 130: Verfahrensschritt
- 140: Verfahrensschritt
- 150: Verfahrensschritt
- 160: Verfahrensschritt

## Patentansprüche

1. Verfahren zur Konfiguration eines an einem Bussystem angeschlossenen Messsystems mit den folgenden Schritten:
a) Detektion des verwendeten Bus-Protokolls durch eine im Messsystem angeordnete Detektierungseinheit,
b) Abrufen der Firmware zum detektierten Protokoll aus einer Datenbank durch eine Initialisierungseinheit,
c) Hinterlegung der Firmware zum detektierten Bus-Protokoll in einer Speichereinheit,
d) Verwendung des in der Speichereinheit hinterlegten Protokolls zur Kommunikation mit dem Bussystem.

2. Verfahren nach Anspruch 1,
**dadurch gekennzeichnet,**
**dass** die Detektierungseinheit auf dem Bussystem gesendete Datenpakete anderer Knoten auswertet, um das verwendete Protokoll zu bestimmen.

3. Verfahren nach einem der Ansprüche 1 bis 2,
**dadurch gekennzeichnet,**
**dass** die Detektierungseinheit ein Anfragesignal über das Bussystem versendet und auf Basis der erhaltenen Reaktion das verwendete Bus-Protokoll bestimmt.

4. Verfahren nach einem der Ansprüche 1 bis 3,
**dadurch gekennzeichnet,**
**dass** die Initialisierungseinheit die Firmware aus einer internen Datenbank lädt.

5. Verfahren nach einem der Ansprüche 1 bis 3,
**dadurch gekennzeichnet,**
**dass** die Initialisierungseinheit die Firmware aus einer externen Datenbank lädt.

6. Verfahren nach einem der Ansprüche 1 bis 5,
**dadurch gekennzeichnet**
**dass** das Messsystem translatorische oder rotatorische Bewegungen misst.

7. Messsystem mit einem Kommunikationsmodul zum Anschluss an ein Bussystem
**dadurch gekennzeichnet**
**dass** das Kommunikationsmodul eine Detektierungseinheit aufweist, die das auf dem Bussystem verwendete Protokoll erkennt.

8. Messsystem nach Anspruch 7
**dadurch gekennzeichnet**
**dass** es als Kodierer, insbesondere als Drehgeber ausgestaltet ist.

9. Messsystem nach Anspruch 7 oder 8
**dadurch gekennzeichnet**
**dass** das Kommunikationsmodul eine Speichereinheit für die Firmware des Protokolls zur Kommunikation mit dem Bussystem und eine Initialisierungseinheit zur Hinterlegung der Firmware des erkannten Protokolls in der Speichereinheit aufweist.

10. Messsystem nach Anspruch 9
**dadurch gekennzeichnet**
**dass** die Initialisierungseinheit einen Webserver zur Kommunikation mit externen Datenbanken aufweist.
